# FASCICULE DE BREVET EUROPEEN

(11) **EP 2 097 473 B1**
(45) Date de publication et mention de la délivrance du brevet: **14.10.2015**
(21) Numéro de dépôt: 07870398.0
(22) Date de dépôt: 14.12.2007
(51) Int. Cl.: C08J 3/22, C08K 5/00

(54) **MELANGES-MAITRES AYANT POUR SUPPORT UN COPOLYMERE D'ETHYLENE ET D'ALPHA-OLEFINE ET CONTENANT DES AGENTS DE VULCANISATION**
MASTER-MISCHUNGEN MIT EINEM ETHYLEN- UND ALPHA-OLEFIN-COPOLYMER ALS TRÄGER UND MIT VULKANISIERUNGSMITTELN
MASTER BLENDS INCLUDING AN ETHYLENE AND ALPHA-OLEFINE COPOLYMER AS A CARRIER AND CONTAINING VULCANISATION AGENTS

(30) Priorité: 15.12.2006 FR 0655546
(43) Date de publication de la demande: 09.09.2009
(73) Titulaire: MLPC International, 40370 Rion-Des-Landes (FR)
(72) Inventeur: LUGEZ, Pierre, 40100 Dax (FR); CAUMIA, Sylvie, 40330 Arsague (FR); YARZABAL, Isabelle, 40990 Herm (FR)
(74) Mandataire: Lhoste, Catherine
(86) Numéro de dépôt international: PCT/FR2007/052520
(87) Numéro de publication internationale: WO 2008/074962

(56) Documents cités:
- WO-A-98/04617
- US-B1- 6 191 230
- DATABASE CA [Online] CHEMICAL ABSTRACTS SERVICE, COLUMBUS, OHIO, US; 30 mai 2000 (2000-05-30), NAKAZAWA, KEIICHI NAKAZAWA, KEIICHI: "Manufacture of olefinic thermoplastic elastomers having excellent adhesion and coatability Manufacture of olefinic thermoplastic elastomers having excellent adhesion and coatability" XP002436332 extrait de STN Database accession no. 2000:356829 & JP 2000 143896 A (ASAHI CHEMICAL INDUSTRY CO., LTD., JAPAN ASAHI CHEMICAL INDUSTRY CO.,) 26 mai 2000 (2000-05-26)

## Description

La présente invention concerne des mélanges-maîtres contenant des agents de vulcanisation pour les élastomères et plus particulièrement des mélanges-maîtres à caractère thermoplastique, ayant pour support un copolymère (A) de l'éthylène et d'une alpha-oléfine, issu de la catalyse de type « métallocène », et d'au moins un copolymère (B) d'éthylène et d'ester d'acide carboxylique insaturé, comprenant des agents de vulcanisation. Ces mélanges-maîtres peuvent être plastifiés ou non.

L'invention concerne aussi un procédé de préparation de mélanges-maîtres contenant des agents de vulcanisation et ayant pour support des copolymères élastomériques de l'éthylène à caractère thermoplastique.

Les élastomères vulcanisés résultent du mélange d'un élastomère tel que par exemple un copolymère styrène-butadiène avec des charges, des plastifiants, des antioxydants, un agent de vulcanisation, un ou plusieurs accélérateurs, éventuellement un activateur, puis ce mélange est mis en forme et chauffé pour provoquer la vulcanisation qui est une réaction de réticulation.

Les agents de vulcanisation, comme les accélérateurs, activateurs, antioxydants, sont utilisés à des doses relativement faibles si on les compare aux autres ingrédients (charges, plastifiants). Comme leur rôle est fondamental dans la réaction de réticulation, il est nécessaire que leur répartition dans le mélange à vulcaniser soit optimale. Pour cela, il est avantageux d'introduire ces produits dans le mélange sous forme de mélanges-maîtres.

En règle générale, ces mélanges-maîtres utilisent notamment comme support un élastomère tel qu'un EPDM (copolymère éthylène-propylène-diène), un EPR (copolymère éthylène-propylène), un SBR (copolymère-styrène-butadiène), ou un NBR (copolymère nitrile-butadiène) ou d'autres élastomères. De tels mélanges-maîtres sous forme de granulés sont décrits notamment dans le brevet FR 2 139 409.

Par définition, ces mélanges-maîtres sont très chargés en additifs. Il est nécessaire de choisir comme support un polymère qui puisse accepter un taux d'additifs élevé et qui puisse se disperser facilement dans le mélange à vulcaniser.

Il est donc avantageux que ce support ait une affinité avec les mélanges à vulcaniser.

Ces mélanges-maîtres se présentent en général sous forme de bandes ou de granulés. L'une des difficultés rencontrées dans leur utilisation réside dans leur tendance à s'agglomérer au cours du stockage. Ce phénomène est dû au collant manifesté par le support aux températures habituelles de stockage. Cette agglomération limite souvent l'utilisation du produit dans les installations usuelles de transport et pesées automatiques qui équipent les ateliers de mélangeage.

Selon l'art antérieur on remédie à cet inconvénient par addition d'agent anti-collant, par exemple le talc, ajouté par pulvérisation ou saupoudrage au moment de la granulation ou de la confection des bandes de mélange-maître. Ce procédé a pour inconvénient d'introduire un produit supplémentaire qu'il est toujours difficile de répandre de façon régulière.

Des améliorations ont été apportées, en particulier selon l'enseignement du document WO 98/04617 (ou du brevet correspondant EP 0915929 B1), qui décrit des mélanges-maîtres ayant pour support au moins un copolymère d'éthylène et d'un ester d'acide carboxylique insaturé, et comprenant des agents de vulcanisation ; grâce à la polarité de ces copolymères, ces mélanges-maîtres se dispersent facilement dans la plupart des polymères ; ils ont en outre un point Vicat faible qui facilite la dispersion du mélange-maître dans les mélanges de caoutchouc.

La demanderesse a maintenant trouvé que des mélanges-maîtres ayant pour support au moins des copolymères de l'éthylène et d'alpha-oléfines obtenus par polymérisation par catalyse « métallocène », à bas point de ramollissement, utilisés en mélange avec des copolymères d'éthylène et d'ester d'acide carboxylique insaturé, décrits ci-dessus, présentaient un effet de synergie sur la viscosité MOONEY du produit final, se traduisant notamment par une baisse sensible de la viscosité.

En outre, le mélange-maître est solide et non collant à température ambiante, ce qui empêche toute agglomération au stockage, quelle que soit la présentation sous forme de bandes, plaquettes ou granulés, et ceci avec éventuellement l'addition de faibles quantités d'agent anti-adhérent tel que, par exemple, le talc. En utilisant les mélanges-maîtres de la présente invention pour vulcaniser des élastomères, on n'observe pas de dégradation des propriétés des caoutchoucs vulcanisés par rapport aux caoutchoucs vulcanisés avec les mélanges-maîtres de l'art antérieur.

En outre, le mélange-maître ainsi obtenu reste plastique aux températures de mise en oeuvre.

La présente invention concerne des mélanges-maîtres thermoplastiques, comprenant des agents de vulcanisation pour les caoutchoucs choisis parmi :
- les systèmes de vulcanisations dits « au soufre »,
- les systèmes de vulcanisation donneurs de soufre,
- les systèmes de vulcanisation à base d'oxydes métalliques,
- les systèmes de vulcanisation à base de peroxydes,
- les systèmes de vulcanisation à base de résines et/ou de savons,
- les systèmes de vulcanisation à base de diamines,
- les systèmes d'accélération à base de dérivés de la thiourée,
ayant comme support au moins un copolymère (A) de l'éthylène et d'alpha-oléfines, obtenu par catalyse « métallocène », et au moins un copolymère (B) d'éthylène et d'ester d'acide carboxylique insaturé.

À titre d'exemple d'agents de vulcanisation, on peut citer :
- les systèmes de vulcanisation dits « au soufre » constitués de soufre associé aux accélérateurs de vulcanisation tels que les sels métalliques de dithiocarbamates (diméthyl dithiocarbamate de zinc, de tellure...), les mono-, di- et tétra-sulfures de thiurame (tétraméthyldisulfure de thiurame...), les sulfénamides, les dérivés de la morpholine, les guanidines, les thiazoles, les thiourées, les dithiophosphates, etc. Ces systèmes peuvent aussi contenir de l'oxyde de zinc (ou d'autres oxydes métalliques jouant le même rôle) associé éventuellement à de l'acide stéarique qui sont des activateurs de vulcanisation des élastomères diéniques,
- les systèmes de vulcanisation donneurs de soufre dans lesquels la majorité du soufre utilisé pour la réticulation provient de molécules soufrées telles que les polysulfures de thiurames, le disulfure de polyphénol, etc.,
- les systèmes de vulcanisation à base d'oxydes métalliques, particulièrement pour des élastomères halogénés (polychloroprène par exemple). Il s'agit notamment de l'oxyde de zinc,
- les systèmes de vulcanisation aux résines constitués par exemple de résines formophénoliques difonctionnelles pouvant être ou non halogénées et associées à des chlorures métalliques ou à l'oxyde de zinc,
- les systèmes de viulcanisation à base de polysulfures d'alkylphénol polymères, qui sont des produits résineux, connus par exemple sous le nom de « Vultac »,
- les systèmes de vulcanisation aux peroxydes, dans lesquels tous les donneurs de radicaux libres peuvent être utilisés, par exemple le peroxyde de dicumyle, en association ou non avec l'oxyde de zinc et l'acide stéarique,
- les vulcanisants à base de diamines (diorthotolylguanidine, diphénylguanidine...) ou de diamines bloquées telles que le carbamate d'hexaméthylène diamine,
- les systèmes d'accélération à base de dérivés de la thio-urée comme l'éthylthio-urée, la diphénylthio-urée ou la diéthylthio-urée.

Les mélanges-maîtres de l'invention peuvent en plus contenir un ou plusieurs des produits suivants :
- des anti-oxydants,
- des anti-ozonants,
- des absorbeurs d'ultraviolets,
- des agents gonflants,
- du noir de carbone et autres charges minérales ou organiques, telles que la silice,
- des dessicants,
- des colorants,
- des nanotubes de carbone (NTC),
- d'autres charges de taille nanométrique.

Les mélanges-maîtres pourraient ne contenir qu'une partie du système de vulcanisation tel que le soufre et on ajouterait l'accélérateur séparément dans l'élastomère.

On ne sortirait pas du cadre de l'invention si les mélanges-maîtres contenaient aussi les autres additifs habituels des élastomères à vulcaniser tels que les plastifiants, le noir de carbone, la silice, des carbonates minéraux, le talc, les ignifugeants. Ces additifs représentent souvent des quantités du même ordre de grandeur ou plus importantes que l'élastomère lui-même et sont toujours en quantités beaucoup plus importantes que le système de vulcanisation. Un tel mélange-maître n'aurait aucun sens car il représente le mélange final de caoutchouc prêt à l'emploi. Cependant, les mélanges maîtres de l'invention peuvent contenir un peu de plastifiant ainsi qu'il sera expliqué plus loin.

Les élastomères à vulcaniser peuvent être non limitativement par exemple le caoutchouc naturel, le poly-isoprène, le SBR, le BR, le NBR, l'EPDM, le polychloroprène, le caoutchouc butyle ou les polyéthers tels que les caoutchoucs épichlorhydrine, les caoutchoucs acrylates et dérivés, les polyuréthanes vulcanisables, y compris les élastomères vulcanisables, réticulables ou modifiables dispersés au sein d'une matrice non élastomérique. S'agissant du copolymère (A), on utilise un copolymère élastomérique d'éthylène et d'alpha-oléfine polymérisé par catalyse de type métallocène et contenant 50 à 90 % en poids d'éthylène et 10 à 50 % en poids d'alpha-oléfine, ayant un indice de fluidité ou MFI (« melt flow index ») de 1 à 300 g/10 mn mesuré selon la norme ISO 1133 avec 2,16 kg à 190°C, et une densité comprise entre 0.850 et 0.920 ; à titre d'exemple d'alpha-oléfine préférée, on peut citer en particulier le butène, l'héxène ou l'octène, ce dernier étant choisi avantageusement.

Ces copolymères se présentent notamment sous la forme de granulés de quelques millimètres.

S'agissant du copolymère (B), on utilise un copolymère d'éthylène et d'ester d'acide carboxylique insaturé, à titre d'exemple d'ester pouvant provenir de la réaction d'un acide carboxylique insaturé avec un monoalcool ayant de 1 à 24 atomes de carbone, on peut citer les (méth)acrylates d'alkyle dont l'alkyle a de 1 à 24 atomes de carbone, et dont la teneur en poids dans le copolymère est comprise entre 20 à 40 %; de préférence, ces copolymères ont un indice de fluidité ou MFI mesuré selon la norme ISO 1133 avec 2,16 kg à 190°C variant de 1 à 1000 g/10mn et un point Vicat inférieur à 45°C.

Avantageusement, des exemples d'acrylate ou de méthacrylates sont le méthylacrylate de méthyle, l'acrylate d'éthyle, l'acrylate de n-butyle, l'acrylate d'iso-butyle, et l'acrylate de 2-éthylhexyle. Ces esters peuvent être introduits dans (B) par greffage (sur des polyéthylènes) ou par copolymérisation directe. La quantité d'additifs (c'est-à-dire d'agents de vulcanisation et d'autres produits éventuels) peut être de 20 à 95 % en poids du mélange-maître. Avantageusement cette quantité est de 70 à 90 %. La densité des mélanges-maîtres peut ainsi varier de 1,0 à 5,5.

Avantageusement, le copolymère (A) est tel que le mélange-maître est solide et non collant à la température ambiante et plastique aux températures de mise en oeuvre, c'est-à-dire au cours du mélange avec le caoutchouc en fabrication et les autres additifs qu'on ajoute dans le caoutchouc en plus du mélange-maître. En particulier, la viscosité MOONEY ML (1 + 4) (mesurée selon la norme ISO 289-1) des mélanges-maîtres est proche des mélanges de caoutchouc dans lesquels ils sont introduits. La température de mise en oeuvre peut varier avec la nature du caoutchouc et des additifs; on ne peut pas en règle générale effectuer le mélange de l'élastomère et de tous ses additifs, y compris le mélange- maître de l'invention, au-dessus de 120°C ou 130°C sans risquer de provoquer un début de vulcanisation.

Avantageusement, le copolymère (A) remplace tout ou partie du copolymère éthylène-propylène avec ou non un diène (noté EP(D)M) couramment utilisé dans l'art antérieur (voir brevet FR 2 139 409). Il apporte une composante visco-élastique qui permet une mise en forme aisée à relativement basse température, notamment sous forme de granulés, plaquettes ou bandes et qui permet une dispersion efficace au sein du support d'un haut taux d'une poudre (70 à 90 % en poids) ayant un caractère renforçant, et une thermoplasticité permettant de réduire la viscosité MOONEY du mélange-maître.

Cette réduction de viscosité se traduit par des températures de mélangeage plus faibles et par une meilleure facilité de filtration, notamment pour des filtrations de 100 µm à 140 µm.

Les mélanges-maîtres de l'invention se plastifient avantageusement à des températures supérieures à 60°C. On peut ainsi les disperser dans les mélanges de caoutchouc tout en restant dans un domaine où il n'y a pas par exemple de risque de prévulcanisation.

Avantageusement, la viscosité MOONEY ML (1 + 4) à 50°C des mélanges-maîtres est comprise entre 10 et 70.

Le mélange-maître peut comprendre un plastifiant tel que par exemple une huile (paraffinique, naphténique ou naphténique hydrogénée), ou un plastifiant phtalate saturé ou non pour faciliter l'incorporation des additifs et/ou ajuster la viscosité.

On note une réduction sensible de la viscosité MOONEY, dû à un effet de synergie entre les copolymères (A) et (B).

On note également une sensible réduction du collant des mélanges-maîtres réalisés, notamment ceux qui contiennent des produits de type résinique (du type résine « tackifiante »), ce qui rend possible la réalisation aisée de mélanges-maîtres à base de ces produits avec les techniques de l'industrie des caoutchoucs qui sont décrites plus loin.

Les proportions de (A) et (B) dans le mélange-maître peuvent être telles que, exprimé en parts le rapport (A)/(B) est compris entre 1/99 et 99/1.

Selon une autre forme de l'invention, le mélange-maître peut comprendre un autre copolymère (C) qui est un copolymère d'éthylène et d'ester d'acide carboxylique saturé ; par exemple un copolymère éthylène-acétate de vinyle à teneur en acétate variant de 18 à 40% en poids et d'indice de fluidité selon la norme ISO 1133 avec 2,16 kg à 190°C variant de 100 à 1000 g/10min et de point Vicat inférieur à 45°C.

Selon une autre forme de l'invention, le mélange-maître peut contenir aussi d'autres polymères différents de (A), (B) ou (C), tels que :
- les élastomères cités plus haut dans lesquels on ajoute les mélanges-maîtres de l'invention ;
- les copolymères blocs styrène-butadiène-styrène (SBS), styrène-éthylène/butène-styrène (SEBS) et styrène-isoprène-styrène (SIS) éventuellement greffés.

Les mélanges-maîtres de l'invention peuvent être fabriqués aussi bien par les techniques de l'industrie des caoutchoucs que celles de l'industrie des thermoplastiques. On peut ainsi utiliser les extrudeuses mono ou bi-vis, les mélangeurs internes, et éventuellement les mélangeurs à cylindres. On peut aussi utiliser des systèmes de mélangeage continu tels que le mélangeur continu LCM de la société Technit Pomini (Italie) ou le mélageur multichambre de la société IKA (Allemagne).

Les mélanges-maîtres de l'invention peuvent être facilement filtrés du fait d'une réduction de la viscosité Mooney par un effet de synergie entre les polymères (A) et (B) ; il s'agit de filtration par exemple à 500, 200, 140, 100, 80 µm, et même moins, selon les besoins. C'est un avantage important de l'invention, dû au comportement thermoplastique et à l'absence de produit anti-collant. Avantageusement les mélanges-maîtres de l'invention sont préparés sur des machines utilisées pour les thermoplastiques en particulier les extrudeuses mono ou bi-vis et autres systèmes de mélangeage en continu. On peut ainsi encore réduire ou même supprimer le talc et éventuellement ajouter des cires qui suppriment tout caractère collant.

La demanderesse a découvert que ces mélanges-maîtres pouvaient être fabriqués sur des machines de mélangeage à plusieurs chambres telles qu'utilisées pour la préparation de produits pâteux.

Par rapport à des matériels classiques de mélangeage tels que mélangeurs à cylindres, mélangeurs internes, extrudeuses bi-vis, ou autres, les avantages principaux sont :
- la meilleure maîtrise pendant la fabrication du caractère collant lié à la thermoplasticité,
- l'augmentation de la qualité de la dispersion,
- l'absence de poudre résiduelle,
- une plus faible consommation énergétique,
- une très grande constance des propriétés physiques des mélanges-maîtres obtenus.

La présente invention concerne aussi un procédé de préparation de mélanges-maîtres contenant des agents de vulcanisation et ayant pour support au moins un copolymère (A) associé à un copolymères (B), tels que décrits ci-dessus, ledit procédé consistant à mélanger le support et les agents de vulcanisation dans un mélangeur multichambre.

De façon avantageuse, les mélanges-maîtres subissent une mise en forme en plaquettes de 20 à 550 mm aussi bien en largeur qu'en longueur pour une épaisseur de 2 à 20mm.

### EXEMPLES :

Dans les exemples suivants :
**PEO :** désigne une gamme de copolymères éthylène-octène obtenus par catalyse de type « métallocène », contenant 50 à 80% en poids d'éthylène et 20 à 50 % en poids d'octène, ayant un indice de fluidité ou MFI (« melt flow index ») de 1 à 300 g/10 mn mesuré selon la norme ISO 1133 avec 2,16 kg à 190°C , et une densité de 0.85 à 0.92. En particulier, PEO 1 a un MFI de 3 g/10 mn, et PEO 2 un MFI de 5 g/10 mn.
**EP(D)M :** désigne un copolymère éthylène-propylène, avec ou sans diène monomère, à caractère élastomérique avec une viscosité MOONEY comprise entre 10 et 100 points à 125°C.
**LOTRYL^{®} :** désigne un copolymère éthylène/acrylate de méthyle de proportion en poids 71/29 ayant un MFI de 2 à 3,5 g/10mn.selon la norme ISO 1133 avec 2,16 kg à 190°C, un point de fusion de 61°C et un point VICAT <40°C (on utilise le LOTRYL^{®} 29MA03 de la société ARKEMA FRANCE).
**EVA :** désigne un copolymère éthylène-acétate de vinyle ayant un MFI de 800 g/10 mn selon la norme ISO 1133 (on utilise l'EVATANE^{®} 28800, de la société ARKEMA FRANCE).
**MBTS :** désigne le disulfure de mercaptobenzothiazole.
**S :** désigne le soufre en poudre.
**ETU :** désigne l'éthylène-thio-urée.
**TMTD** : désigne le méthyl-2-mercaptobenzimidazole.
**HUILE** : désigne une huile de paraffine.
**Acide gras :** désigne un agent de mise en oeuvre (acide stéarique notamment). Les mélanges ont été préparés dans un mélangeur interne de laboratoire et/ou dans un mélangeur multichambre de laboratoire, puis repris pour mise en forme sur des cylindres suiveurs.

On constate que les deux technologies conduisent à des résultats similaires. Le cycle de mélangeage au mélangeur interne est le suivant :
- Mélangeur interne de type engrenant de 2.5 L de volume utile,
- vitesse rotors = 50 tours/min,
- T initiale = 40°C ; T finale de tombée variant de 70°C à 85°C,
- durée du cycle = 5min ; tombée 3 min après le pic maximum de couple,
- ordre d'incorporation : 1^{ère} moitié de poudre, puis additifs (acide gras, polymère(s)), puis huile, puis 2^{ème} moitié poudre.

Les résultats sont reportés sur les tableaux 1 à 5 suivants. Les pourcentages de l'agent de vulcanisation sont en exprimés en % en poids par rapport au poids total de la composition du mélange-maître.

On constate un abaissement de la viscosité et/ou un abaissement de la température de tombée du mélange-maître, ce qui permet de limiter l'échauffement du produit et donc de limiter sa dégradation.

Dans le **Tableau 1,** sont rassemblés l'essai comparatif 1 (selon sensiblement le brevet EP 0 915 929 B1) et selon l'invention : essais 2 et 3 de mélanges-maîtres avec comme accélérateur de vulcanisation le MBTS.

**-- Tableau 1 --**

| **MBTS à 75 %** | **Essai comp, 1** | **Essai 2** | **Essai 3** |
|---|---|---|---|
| MBTS | 75 | 75 | 75 |
| HUILE | 11,5 | 11,5 | 11,5 |
| EVA | 7,5 | 3,5 | 3,5 |
| LOTRYL | 0 | 4 | 4 |
| EP(D)M | 6 | | |
| PEO 1 | | 6 | |
| PEO 2 | | | 6 |
| VISCO ML (1+4) 50°C | 33 | 22 | 33 |
| VISCO ML (1+4) 80°C | 25 | 21 | 25 |
| VISCO ML (1+4) 100°C | 27 | 26 | 34 |
| Température de tombée du produit (°C) | 85 | 80 | 82 |

Dans le **Tableau 2,** sont rassemblés l'essai comparatif 4, qui représente l'art antérieur (voir brevet EP 0 915 929 B1) et selon l'invention les essais 5 et 6 de mélanges-maîtres avec comme accélérateur de vulcanisation le TMTD.

**-- Tableau 2 --**

| **TMTD à 80 %** | **Essai comp. 4** | **Essai 5** | **Essai 6** |
|---|---|---|---|
| TMTD | 80 | 80 | 80 |
| HUILE | 11 | 11 | 11 |
| LOTRYL | 5 | 5 | 5 |
| EP(D)M | 4 | | |
| PEO 1 | | 4 | |
| PEO 2 | | | 4 |
| VISCO ML (1+4) 50°C | 31 | 25 | 23 |
| VISCO ML (1+4) 80°C | 16 | 12 | 12 |
| VISCO ML (1+4) 100°C | 21 | 17 | 14 |
| Température de tombée du produit (°C) | 76 | 79 | 77 |

Dans le **Tableau 3,** sont rassemblés l'essai comparatif 7, qui réprésente l'art antérieur (voir brevet EP 0 915 929 B1) et selon l'invention l'essai 8 de mélange-maîtres avec comme accélérateur de vulcanisation l'ETU.

**-- Tableau 3 --**

| **ETU à 80 %** | **Essai comp. 7** | **Essai 8** |
|---|---|---|
| ETU | 80 | 80 |
| HUILE | 10 | 10 |
| Acide gras | 1 | 1 |
| LOTRYL | 4 | 4 |
| EP(D)M | 3 | |
| PEO 1 | | 3 |
| EVA | 2 | 2 |
| VISCO ML (1+4) 50°C | 33 | 30 |
| VISCO ML (1+4) 80°C | 33 | 33 |
| VISCO ML (1+4) 100°C | 45 | 43 |

Dans le **Tableau 4,** sont rassemblés l'essai comparatif 9, qui réprésente l'art antérieur (voir brevet EP 0 915 929 B1) et selon l'invention les essais 10 et 11 de mélanges-maîtres avec un agent de vulcanisation qui est le soufre.

**-- Tableau 4 --**

| **Soufre 80 %** | **Essai comp. 9** | **Essai 10** | **Essai 11** |
|---|---|---|---|
| S | 80 | 80 | 80 |
| HUILE | 9,5 | 9,5 | 9,5 |
| LOTRYL | 2 | 2 | 2 |
| Acide gras | 1 | 1 | 1 |
| EVA | 1 | 1 | 1 |
| EP(D)M | 6,5 | | |
| PEO 1 | | 6,5 | |
| PEO 2 | | | 6,5 |
| VISCO ML (1+4) 50°C | 49 | 44 | 28 |
| VISCO ML (1+4) 80°C | 22 | 18 | 16 |
| VISCO ML (1+4) 100°C | 17 | 13 | 14 |
| Température de tombée du produit (°C) | 83 | 82 | 81 |

Dans le **Tableau 5,** sont rassemblés l'essai comparatif 12, qui réprésente l'art antérieur (voir brevet EP 0 915 929 B1) et selon l'invention l'essai 13 de mélange-maître avec une résine de type polysulfures d'alkylphénol polymère, connu par exemple sous le nom de « Vultac ».

**-- Tableau 5 --**

| | **Essai comp. 12** | **Essai 13** |
|---|---|---|
| Vultac | 75 | 75 |
| Huile | 10 | 10 |
| LOTRYL | 15 | 2 |
| EP(D)M | 0 | 0 |
| PEO 2 | 0 | 13 |
| Collant à chaud (75°C) | Important (impossible à sortir du mélangeur) | Très faible (le mélange « tombe » sous son propre poids du mélangeur) |
| Viscosité Mooney | | |
| VISCO ML (1+4) 50°C | 60 | 70 |
| VISCO ML (1+4) 80°C | 25 | 15 |
| VISCO ML (1+4) 100°C | 5 | 6 |

Dans le **Tableau 6,** on note une inversion de l'effet entre le PEO 1 et PEO 2, par rapport aux essais suivants. Dans ce tableau, sont rassemblés l'essai comparatif 14, qui représente l'art antérieur (voir brevet EP 0 915 929 B1) et selon l'invention, les essais 16 et 17 de mélange-maîtres avec comme accélérateur de vulcanisation le MBT (mercaptobenzothiazole),

**-- Tableau 6 --**

| **MBT 75 %** | **Essai comp.14** | **Essai 15** | **Essai 17** |
|---|---|---|---|
| MBT | 75 | 75 | 75 |
| huile | 12 | 12 | 12 |
| Lotryl | 13 | 5 | 5 |
| PEO 2 | | 8 | |
| PEO 1 | | | 8 |
| VISCO ML (1+4) 50°C | 29 | 24 | 18 |
| VISCO ML (1+4) 80°C | 20 | 18 | 16 |
| VISCO ML (1+4) 100°C | 18 | 17 | 14 |
| Température de tombée du produit (°C) | 80 | 72 | 72 |

Dans le **Tableau 7,** sont rassemblés l'essai comparatif 20, qui représente l'art antérieur (voir brevet EP 0 915 929 B1) et selon l'invention, les essais 21 et 22 de mélange-maîtres avec comme agent de vulcanisation le soufre (S),

**-- Tableau 7 --**

| **S 75 %** | **Essai comp. 20** | **Essai 21** | **Essai 22** |
|---|---|---|---|
| S maille 300 | 75 | 75 | 75 |
| huile | 12 | 12 | 12 |
| Lotryl | 13 | 5 | 5 |
| PEO 1 | | 8 | |
| PEO 2 | | | 8 |
| VISCO ML (1+4) 50°C | 54 | 34 | 24 |
| VISCO ML (1+4) 80°C | 23 | 13 | 9 |
| VISCO ML (1+4) 100°C | 11 | 7 | 6 |
| Température de tombée du produit (°C) | 85 | 83 | 82 |

Dans le **Tableau 8,** sont rassemblés l'essai comparatif 17, qui représente l'art antérieur ( voir brevet EP 0 915 929 B1) et selon l'invention, les essais 18 et 19 de mélange-maîtres avec comme accélérateur de vulcanisation le ZDBC (dibutyldithiocarbamate de zinc),

**-- Tableau 8 --**

| **ZDBC 80%** | **Essai comp. 17** | **Essai 18** | **Essai 19** |
|---|---|---|---|
| ZDBC | 80 | 80 | 80 |
| huile | 10 | 10 | 10 |
| acide gras | 1 | 1 | 1 |
| Lotryl | 9 | 3 | 3 |
| PEO 1 | | 6 | |
| PEO 2 | | | 6 |
| VISCO ML (1+4) 50°C | 28 | 23 | 21 |
| VISCO ML (1+4) 80°C | 11 | 9 | 6 |
| VISCO ML (1+4) 100°C | 9 | 7 | 5 |
| Température de tombée du produit (°C) | 67 | 65 | 62 |

## Revendications

1. Mélanges-maîtres thermoplastiques, comprenant des agents de vulcanisation pour les caoutchoucs choisis parmi :
- les systèmes de vulcanisations dits « au soufre »,
- les systèmes de vulcanisation donneurs de soufre,
- les systèmes de vulcanisation à base d'oxydes métalliques,
- les systèmes de vulcanisation à base de peroydes
- les systèmes de vulcanisation à base de résines et/ou de savons,
- les systèmes de vulcanisation à base de diamines,
- les systèmes d'accélération à base de dérivés de la thiourée,
**caractérisés en ce qu'**ils comprennent comme support au moins un copolymère (A) de l'éthylène et d'alpha-oléfines, obtenu par catalyse « métallocène », et au moins un copolymère (B) d'éthylène et d'ester d'acide carboxylique insaturé.

2. Mélanges-maîtres selon la revendication 1, **caractérisés en ce que** le copolymère (A) est un copolymère d'éthylène-octène contenant 50 à 90 % en poids d'éthylène et 10 à 50 % en poids d'octène, ayant un indice de fluidité ou MFI de 1 à 300 g/10 mn (mesuré selon la norme ISO 1133, avec 2,16 kg à 190°C), et une densité comprise entre 0,85 et 0,92.

3. Mélanges-maîtres selon les revendications 1 et 2, **caractérisés en ce que** le copolymère (B) est un copolymère d'éthylène et de (méth)acrylate d'alkyle, ayant une température de fusion comprise entre 50 et 120° C.

4. Mélanges-maîtres selon la revendication 3, **caractérisés en ce que** le copolymère (B) est choisi parmi les copolymères d'éthylène et de méthylacrylate de méthyle, d'acrylate d'éthyle, d'acrylate de n-butyle, d'acrylate d'iso-butyle, et d'acrylate de 2-éthylhexyle.

5. Mélanges-maîtres selon l'une des revendications précédentes, **caractérisés en ce que** le rapport exprimé en parts des copolymères (A) et (B), (A)/(B) est compris entre 1/99 et 99/1.

6. Mélanges-maîtres selon l'une des revendications précédentes, **caractérisés en ce qu'**ils comprennent en outre un copolymère (C), qui est un copolymère d'éthylène et d'ester d'acide carboxylique saturé, tel que notamment l'acétate de vinyle.

7. Mélanges-maîtres selon l'une des revendications précédentes, **caractérisés en ce qu'**ils comprennent aussi un ou plusieurs produits choisis parmi les antioxydants, les antiozonants, les absorbeurs d'ultra violets, les agents gonflants, les dessicants, les charges et tous types d'agent renforçant.

8. Mélanges-maîtres selon l'une des revendications précédentes, **caractérisés en ce que** la quantité d'agents de vulcanisation ou d'autres produits est de 20 à 95 % en poids du mélange-maître.

9. Mélanges-maîtres selon l'une des revendications précédentes, **caractérisés en ce que** leur viscosité MOONEY ML(1 + 4) à 50° C est comprise entre 10 et 70.

10. Procédé de préparation de mélanges-maîtres selon l'une des revendications précédentes, contenant des agents de vulcanisation et ayant pour support les copolymères (A) et (B), et éventuellement (C), ledit procédé consistant à mélanger le support et les agents de vulcanisation ou autres produits destinés au caoutchouc, dans un mélangeur multichambre.

## Patentansprüche

1. Thermoplastische Masterbatches, umfassend Vulkanisationsmittel für Kautschuke, ausgewählt aus:
- sogenannten "Schwefel"-Vulkanisationssystemen,
- Schwefeldonor-Vulkanisationssystemen,
- Vulkanisationssystemen auf Basis von Metalloxiden,
- Vulkanisationssystemen auf Basis von Peroxiden,
- Vulkanisationssystemen auf Basis von Harzen und/oder Seifen,
- Vulkanisationssystemen auf Basis von Diaminen,
- Beschleunigungssystemen auf Basis von Thioharnstoffderivaten,
**dadurch gekennzeichnet, dass** sie als Träger mindestens ein durch "Metallocen"-Katalyse erhaltenes Copolymer (A) von Ethylen und alpha-Olefinen und mindestens ein Copolymer (B) von Ethylen und ungesättigtem Carbonsäureester umfassen.

2. Masterbatches nach Anspruch 1, **dadurch gekennzeichnet, dass** es sich bei dem Copolymer (A) um ein Copolymer von Ethylen und Octen mit 50-90 Gew.-% Ethylen und 10 bis 50 Gew.-% Octen, einem Schmelzflussindex oder MFI von 1 bis 300 g/10 min (gemessen gemäß ISO-Norm 1133 mit 2,16 kg bei 190°C) und einer Dichte zwischen 0,85 und 0,92 handelt.

3. Masterbatches nach den Ansprüchen 1 und 2, **dadurch gekennzeichnet, dass** es sich bei dem Copolymer (B) um ein Copolymer von Ethylen und Alkyl(meth)-acrylat mit einer Schmelztemperatur zwischen 50 und 120°C handelt.

4. Masterbatches nach Anspruch 3, **dadurch gekennzeichnet, dass** das Copolymer (B) aus Copolymeren von Ethylen und Methylmethacrylat, Ethylacrylat, n-Butylacrylat, Isopropylacrylat und 2-Ethylhexylacrylat ausgewählt ist.

5. Masterbatches nach einem der vorhergehenden Ansprüche, **dadurch gekennzeichnet, dass** das in Teilen der Copolymere (A) und (B) ausgedrückte Verhältnis (A)/(B) zwischen 1/99 und 99/1 liegt.

6. Masterbatches nach einem der vorhergehenden Ansprüche, **dadurch gekennzeichnet, dass** sie außerdem ein Copolymer (C) enthalten, bei dem es sich um ein Copolymer von Ethylen und gesättigtem Carbonsäureester, wie insbesondere Vinylacetat, handelt.

7. Masterbatches nach einem der vorhergehenden Ansprüche, **dadurch gekennzeichnet, dass** sie außerdem ein oder mehrere Produkte, die aus Antioxidantien, Antiozonantien, UltraviolettAbsorbern, Treibmitteln, Trockenmitteln, Füllstoffen und allen Arten von Verstärkungsmitteln ausgewählt sind, umfasst.

8. Masterbatches nach einem der vorhergehenden Ansprüche, **dadurch gekennzeichnet, dass** die Menge an Vulkanisationsmitteln oder anderen Produkten 20 bis 95 Gew.-% des Masterbatch beträgt.

9. Masterbatches nach einem der vorhergehenden Ansprüche, **dadurch gekennzeichnet, dass** ihre Mooney-Viskosität ML(1+4) bei 50°C zwischen 10 und 70 liegt.

10. Verfahren zur Herstellung von Masterbatches nach einem der vorhergehenden Ansprüche, die Vulkanisationsmittel enthalten und als Träger die Copolymere (A) und (B) und gegebenenfalls (C) aufweisen, bei dem man den Träger und die Vulkanisationsmittel oder andere Produkte, die für Kautschuk bestimmt sind, in einem Mehrkammermischer mischt.

## Claims

1. Thermoplastic masterbatches, comprising vulcanizing agents for rubbers chosen from:
- so-called "sulphur" vulcanization systems;
- sulphur-donor vulcanization systems;
- vulcanization systems based on metal oxides;
- vulcanization systems based on peroxides;
- vulcanization systems based on resins and/or soaps;
- vulcanization systems based on diamines; and
- acceleration systems based on derivatives of thiourea,
**characterized in that** they comprise, as a support, at least one copolymer (A) of ethylene and α-olefins, obtained by "metallocene" catalysis, and at least one copolymer (B) of ethylene and an unsaturated carboxylic acid ester.

2. Masterbatches according to Claim 1, **characterized in that** the copolymer (A) is an ethylene/octene copolymer containing 50 to 90 wt% of ethylene and 10 to 50 wt% of octene, having a melt flow index or MFI of 1 to 300 g/10 min (measured according to the standard ISO 1133, with 2.16 kg at 190°C), and a density between 0.85 and 0.92.

3. Masterbatches according to Claims 1 and 2, **characterized in that** the copolymer (B) is a copolymer of ethylene and alkyl (meth)acrylate, having a melting point between 50 et 120°C.

4. Masterbatches according to Claim 3, **characterized in that** the copolymer (B) is chosen from copolymers of ethylene and methyl methacrylate, ethyl acrylate, n-butyl acrylate, isobutyl acrylate and 2-ethylhexyl acrylate.

5. Masterbatches according to one of the preceding claims, **characterized in that** the ratio (A)/(B), expressed as parts of the copolymers (A) and (B), is between 1/99 and 99/1.

6. Masterbatches according to one of the preceding claims, **characterized in that** they comprise, in addition, a copolymer (C), which is a copolymer of ethylene and a saturated carboxylic acid ester, such as in particular vinyl acetate.

7. Masterbatches according to one of the preceding claims, **characterized in that** they also comprise one or more products chosen from antioxidants, antiozonants, ultraviolet absorbers, blowing agents, dessicants, fillers and all types of reinforcing agents.

8. Masterbatches according to one of the preceding claims, **characterized in that** the amount of vulcanizing agents or other products is from 20 to 95 wt% of the masterbatch.

9. Masterbatches according to one of the preceding claims, **characterized in that** their Mooney viscosity ML(1+4) at 50°C is between 10 and 70.

10. Process for preparing masterbatches according to one of the preceding claims, containing vulcanizing agents and having the copolymers (A), (B) and optionally (C) as a support, said process consisting in blending the support and the vulcanizing agents or other products intended for the rubber in a multi-chamber mixer.
